Europäisches Patentamt

European Patent Office

Office européen des brevets

(19)

(11) **EP 0 538 126 B1**

(12) **FASCICULE DE BREVET EUROPEEN**

(45) Date de publication et mention
de la délivrance du brevet:
**11.09.1996 Bulletin 1996/37**

(51) Int Cl.6: **G01J 9/02**

(21) Numéro de dépôt: **92402811.1**

(22) Date de dépôt: **14.10.1992**

(54) **Procédé et dispositif pour l'analyse d'une surface d'onde lumineuse**

Verfahren und Vorrichtung zur Analyse einer Lichtwellenfront

Method and device for analysing the wavefront of light

(84) Etats contractants désignés:
**DE GB**

(30) Priorité: **18.10.1991 FR 9112912**

(43) Date de publication de la demande:
**21.04.1993 Bulletin 1993/16**

(73) Titulaire: **OFFICE NATIONAL D'ETUDES ET DE
RECHERCHES AEROSPATIALES
F-92322 Chatillon sous Bagneux (FR)**

(72) Inventeurs:
• **Primot Jérôme
F-94800 Villejuif (FR)**
• **Surget, Jean
F-94500 Champigny sur Marne (FR)**

(74) Mandataire: **Plaçais, Jean-Yves et al
Cabinet Netter,
40, rue Vignon
75009 Paris (FR)**

(56) Documents cités:
**EP-A- 0 189 482**          **US-A- 4 774 659**

• **APPLIED OPTICS vol. 25, no. 23,1 décembre
1986, pages 4280-4287, Wa shington, DC, US;
K.-H. HOFMANN et al.: "Highangular resolution
shearing spect roscopy and triple shearing
interferometry" \*pages 4283,4284; figures 1,10\*.**
• **PATENT ABSTRACTS OF JAPAN vol.11, no.147
(P-575)(2594), 14 mai 1987; & JP - A - 61284601 .**

## Description

L'invention concerne l'analyse de la surface d'onde, ou "front d'onde", d'un faisceau de lumière, et plus particulièrement l'analyse des défauts de la surface d'onde. De tels défauts surviennent généralement lors de la propagation du faisceau de lumière dans un milieu autre que le vide.

Ce type d'analyse permet le contrôle des éléments optiques, ainsi que la qualification des appareils optiques. Il permet aussi l'étude de phénomènes physiques non directement mesurables, tels que les variations d'indice optique au sein de milieux turbulents que l'on peut rencontrer à la traversée de l'atmosphère terrestre, ou bien dans une veine de soufflerie, par exemple.

Dans l'analyse de surface d'onde, il existe deux classes principales de procédés : ceux qui permettent la mesure d'une quantité directement reliée à la phase de l'onde, et ceux qui mesurent une quantité liée aux gradients et/ou à la courbure locale de la phase de cette même onde.

Les appareils relevant de la première classe ont l'avantage d'une grande simplicité dans le traitement des mesures, puisqu'il n'est pas nécessaire de procéder à une ou deux intégrations sur celles-ci pour obtenir le profil de la surface d'onde. Par contre, leur dynamique et leur sensibilité ne sont pas réglables, ce qui limite leur champ d'application à, en général, la mesure de faibles déphasages.

La seconde classe d'appareils (gradients et/ou courbures locales de la phase) peut être subdivisée en deux sous-classes.

La première sous-classe opère à partir des systèmes dits "géométriques". Un premier exemple en est le test de HARTMANN (Zverev V.A., et al, "Testing the primary mirror of the Large Azimuthal Telescope by the Hartmann method during its manufacture", Sov. J. Opt. Technol., Vol 44, No 3, 1977). Le principe consiste à introduire un masque dans le plan d'analyse, pour définir des pinceaux de rayons lumineux bien localisés. On étudie alors la déviation de ceux-ci par rapport aux trajets idéaux qu'ils auraient dû suivre, tels que prévus par les lois de l'optique géométrique. Cette nécessité de recourir à un masque est rédhibitoire pour de nombreuses applications, par exemple en présence de faibles flux lumineux.

Une variante est l'analyseur de Hartmann-Shack (Wyant J.C. et al., "Phase measurements systems for adaptive optics", AGARD Conf. Proc., No 300, 1981). Au lieu d'un masque, cet analyseur utilise une grille de micro-lentilles, placée dans un plan conjugué du plan d'analyse. La dynamique de ce type de système est limitée, car pour les forts gradients locaux de la phase de l'onde analysée, la focalisation de chaque micro-lentille s'effectue loin de son axe optique. En outre, l'appareil manque de souplesse d'utilisation: si l'on désire changer sa sensibilité, il faut à chaque fois réaliser une nouvelle grille de micro-lentilles de longueurs focales différentes.

A la sous-classe dite "géométrique" appartiennent encore les systèmes fondés sur un principe d'ombroscopie (Roddier F. et al., "Curvature sensing and compensation : a new concept in adaptive optics", Appl. Opt., Vol. 27, No 7, 1988). De tels systèmes permettent de déterminer la courbure locale de la surface d'onde mais propagent toute erreur de mesure lorsque l'on reconstruit la phase analysée, empêchant une analyse spatialement fine.

La seconde sous-classe est celle des système interférométriques. En ce domaine, on connaît notamment les réalisations suivantes :

- Wyant J.C., "Shearing interferometer", Brevet Etats-Unis No 3 829 219, Aug. 1971,

- ONERA, Fontanella J.C. et al., "Dispositif d'analyse et de correction de surface d'onde en temps réel", Brevet Français N° 84 07370, publié sous le N° 2 564 198,

- Wang C.P., "Measurement of phase fluctuations in a HF chemical laser beam", J. Appl. Phys., Vol 50, No 12, 1979.

Ces appareils, dont certains peuvent fonctionner de manière achromatique, présentent, par rapport aux systèmes géométriques, l'inconvénient de ne permettre qu'une analyse mono-dimensionnelle du gradient de la surface d'onde. Il faut donc deux appareils pour obtenir deux informations de gradients complémentaires sur ladite surface, mais on risque d'y introduire une erreur différentielle.

On connait par ailleurs, d'après le document de K.H.Hofmann et G.Weigelt : "High angular resolution shearing spectroscopy and triple shearing interferometry", Applied Optics, vol.25, n°23, p.4280-4287, un procédé ayant pour but de déterminer la phase et le module de la transformée de Fourier d'un faisceau issu d'un objet inconnu, en s'affranchissant des aberrations qu'il peut rencontrer sur le trajet objet-plan d'analyse.

Un tel procédé est sensé reconstruire l'objet observé à partir d'une unique mesure interférométrique résultant de la superposition exacte de trois répliques de front d'onde ayant subi des rotations de 180° les unes par rapport aux autres. Cette méthode rotationnelle est dite de "phase closure".

Pour mettre en oeuvre ce procédé, il faut un dispositif équipé de quatre lames séparatrices associées à trois dioptres différents renvoyant les trois faisceaux colinéaires.

Un tel dispositif autorise certes la reconstruction d'un objet, mais il ne peut pas permettre l'analyse point par point d'un front d'onde à cause de la superposition de répliques ayant subi des rotations.

La présente invention a pour premier but de permettre une analyse simultanée des gradients d'une surface d'onde suivant trois axes non colinéaires et, éventuellement, de la courbure locale de cette surface d'onde.

Un autre but de l'invention est de permettre une mesure précise de la phase de la surface d'onde, même en présence de fortes variations de celle-ci. Plus précisément, il s'agit notamment de pouvoir contrôler des systèmes optiques pour des couples de points non optiquement stigmatiques.

L'invention a également pour but de fournir un appareil de composition simple, ne nécessitant pas d'étude complexe pour sa réalisation et sa mise au point, y compris lorsque l'on souhaite faire varier la longueur d'onde de la source.

L'invention a également pour but de fournir un procédé et un appareil pour lesquels la sensibilité et la dynamique soient réglables facilement.

L'invention a aussi pour but de permettre un recoupement des informations obtenues, de façon à pouvoir estimer l'erreur sur la mesure à partir de cette mesure elle-même.

L'invention offre tout d'abord un procédé pour l'analyse des défauts de la surface d'onde d'un faisceau de lumière, survenus lors de sa propagation.

Ce procédé comprend, de façon connu d'après le document de K.H.Hofmann et G.Weigelt décrit précédemment, les étapes suivantes :

a) on applique un faisceau de lumière monochromatique à un système optique définissant, sur le trajet dudit faisceau, au moins deux zones optiquement conjuguées l'une de l'autre, l'une dite plan d'analyse, et l'autre dite plan de partition,

b) on prévoit, sensiblement au niveau du plan de partition ou d'une image de celui-ci, au moins trois dioptres principaux, au moins partiellement réfléchissants, ces trois dioptres renvoyant, à partir dudit faisceau, trois faisceaux qui interfèrent en une zone dite plan d'observation, et

c) on observe et on analyse l'image interférométrique, existant dans au moins une zone dite plan d'observation, voisine d'un plan de référence sensiblement confondu avec le plan de partition ou conjugué de celui-ci.

Le procédé selon l'invention est caractérisé par le fait que :

- d'une première part, dans l'étape b) les trois faisceaux sont renvoyés respectivement par trois dioptres principaux selon des axes non colinéaires,
- d'une seconde part, dans l'étape c) l'image interférométrique, formée au moyen des trois faisceaux décalés transversalement, contient des informations sur les défauts de la surface d'onde du faisceau analysé, selon trois directions, et
- d'une troisième part, dans l'étape c) l'analyse par traitement d'image comprend :

    . une transformée de Fourier spatiale sur l'intensité lumineuse mesurée,
    . la séparation, le filtrage et le recentrage de certains au moins des harmoniques liés aux interférences entre les trois faisceaux renvoyés, pris deux à deux, et
    . l'application d'une transformée de Fourier inverse, séparément à chacun de ces harmoniques, ce qui fournit trois indications de gradient de défauts de phase de la surface d'onde dans trois directions liées à chaque fois à celles du couple de deux faisceaux renvoyés concernés.

De préférence, les images sont obtenus à l'aide d'une caméra électronique.

Il est également avantageux de procéder en mode différentiel, c'est à dire par comparaison de deux images interférométriques obtenues dans des conditions différentes quant à la distance plan de référence/plan d'observation ou aux perturbations subies par le faisceau à analyser, au niveau du plan d'analyse.

Par perturbations , on entend la présence d'un échantillon, au niveau duquel est situé le plan d'analyse, ou bien des variations d'indice d'un milieu continu, par exemple.

Une application particulièrement intéressante est celle où l'échantillon est un miroir: le rayonnement monochromatique se situe dans l'infra-rouge pour un miroir en cours de doucissage (phase intermédiaire du polissage où le miroir est encore diffusant dans le visible), et dans le visible pour son contrôle final. S'agissant d'un miroir concave de grande ouverture, tel qu'un miroir quasi-paraboloïde de télescope, celui-ci peut être illuminé par une source de rayonnement monochromatique située en son centre de courbure, sans qu'on ait à recourir à des organes optiques de compensation d'aberration sphérique ("null lens").

L'invention offre également un dispositif pour l'analyse des défauts de la surface d'onde d'un faisceau de lumière, survenus lors de sa propagation.

Ce dispositif comprend de façon connue :

- un système optique propre à recevoir un faisceau de lumière monochromatique, et définissant, sur le trajet dudit faisceau, au moins deux zones optiquement conjuguées l'une de l'autre, l'une dite plan d'analyse, et l'autre dite plan de partition,
- un interféromètre comprenant au moins trois dioptres principaux, au moins partiellement réfléchissants, situés au voisinage du plan de partition, ou d'une image de celui-ci, ces trois dioptres renvoyant trois faisceaux qui interfèrent en une zone dite plan d'observation, et
- des moyens d'observation et de traitement de l'image interférométrique, formée dans le plan d'observation.

Il est caractérisé par le fait que les trois dioptres principaux sont sensiblement plans et aptes à renvoyer les trois faisceaux selon des axes non colinéaires, en mettant en oeuvre un ou deux dioptre(s) auxiliaire(s) semi-transparent(s).

Cela permet auxdits moyens de traitement d'obtenir des informations sur les défauts de la surface d'onde du faisceau à analyser.

Dans le présent texte, semi-transparent signifie partiellement transparent, avec un taux de réflexion substantiel, mais non nécessairement égal à 50 %.

De préférence, on prévoit de loger le dioptre auxiliaire semi-transparent en amont ou en aval du plan de partition. Ce dioptre auxiliaire peut être proche du plan de partition, auquel cas un ou plusieurs des dioptres principaux peuvent être disposés au niveau de l'image du plan de partition que donne ce dioptre auxiliaire. En variante, les trois dioptres principaux sont disposés sensiblement dans le plan de partition.

Dans un premier mode de réalisation, l'interféromètre comprend un cube séparateur en matériau transparent, muni d'un plan diagonal semi-transparent. Optiquement, un tel cube possède quatre faces utiles, non perpendiculaires à son plan diagonal semi-transparent; parmi ces quatre faces utiles, deux sont situées d'un côté du plan diagonal, et deux de l'autre côté. L'une de ces quatre faces est la face d'entrée. La face utile du cube non perpendiculaire à ce plan diagonal et située du même côté de ce plan diagonal que la face d'entrée est inclinée par rapport à la forme cubique pure. Elle définit le premier dioptre principal. La face utile opposée à la face d'entrée qui peut, elle aussi, être inclinée par rapport à la forme cubique pure, définit un second dioptre principal. Le troisième dioptre principal est placé à l'extérieur du cube au voisinage de l'un des deux premiers, et incliné par rapport à celui-ci. Il peut être défini par la face avant d'une lame dont la face arrière est dépolie. Enfin, la dernière face utile du cube est la face de sortie.

En variante, l'interféromètre comprend trois membranes sensiblement planes réfléchissantes diversement inclinées sur l'axe du faisceau, au voisinage du plan de partition. Le dioptre auxiliaire peut être défini lui aussi par une membrane séparatrice sensiblement plane semi-transparente.

D'autres caractéristiques et avantages de l'invention apparaîtront à l'examen de la description détaillée ci-après, et des dessins annexés, sur lesquels :

- la figure 1 est le schéma d'un montage de contrôle utilisant un premier mode de réalisation de l'invention ;

- la figure 2 est une vue partielle agrandie d'une partie du schéma de la figure 1 ;

- la figure 3 est une vue schématique montrant une variante de réalisation du dispositif de la figure 2 ;

- la figure 4 est un schéma optique de principe permettant de mieux comprendre le fonctionnement des appareils proposés ;

- les figures 5A et 5B sont des schémas simplifiés montrant des variations de taches d'interférences illustratives de l'invention ;

- la figure 6 est un diagramme dans le plan de Fourier montrant la distribution d'harmoniques obtenus dans un cas de décalages perpendiculaires de faisceaux ;

- les figures 6A et 6B sont respectivement un schéma des taches d'interférence et un diagramme dans le plan de Fourier, dans le cas de décalages de faisceaux à 120° ; et

- la figure 7 est le schéma d'un second mode de réalisation de l'invention, appliqué à un miroir de télescope, avec en outre interversion optique entre l'interféromètre et le plan d'analyse.

La présente invention fait appel à des caractéristiques géométriques. En conséquence, les dessins annexés sont à considérer comme partie intégrante de la description. Ils pourront non seulement servir à mieux faire comprendre celle-ci, mais aussi contribuer à la définition de l'invention, le cas échéant.

Comme déjà indiqué, l'invention concerne l'analyse d'une surface d'onde "lumineuse". Il doit être entendu :

- que "lumineuse" couvre non seulement la lumière visible, mais aussi l'infra-rouge et l'ultra-violet, voire toute onde électro-magnétique susceptible d'un traitement optique;

- qu'un faisceau lumineux donné n'a pas nécessairement une surface d'onde constante; dans ce cas; on s'intéresse à la surface d'onde dans le plan dit "d'analyse";

- que la surface d'onde n'est bien définie que si la source lumineuse est ponctuelle;

L'invention peut s'appliquer à des sources de faible étendue.

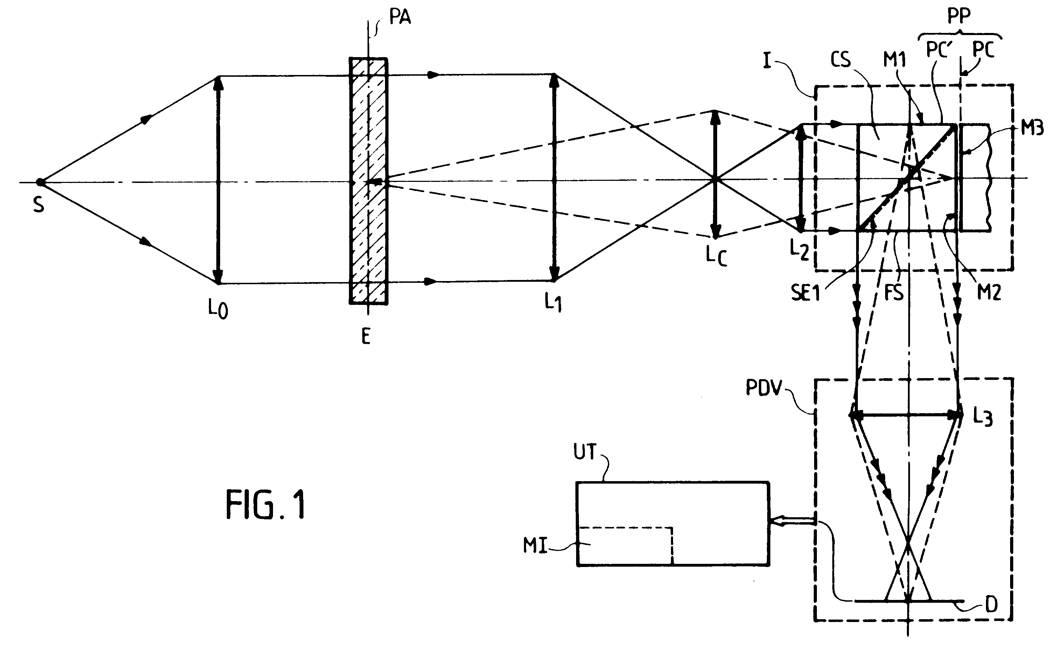

La figure 1 illustre un premier mode de réalisation de l'invention, dans le contexte d'une application au contrôle optique.

Sur la figure 1, une source de lumière monochromatique S est placée au foyer d'une lentille collimatrice L0. La source S possède une longueur de cohérence donnée.

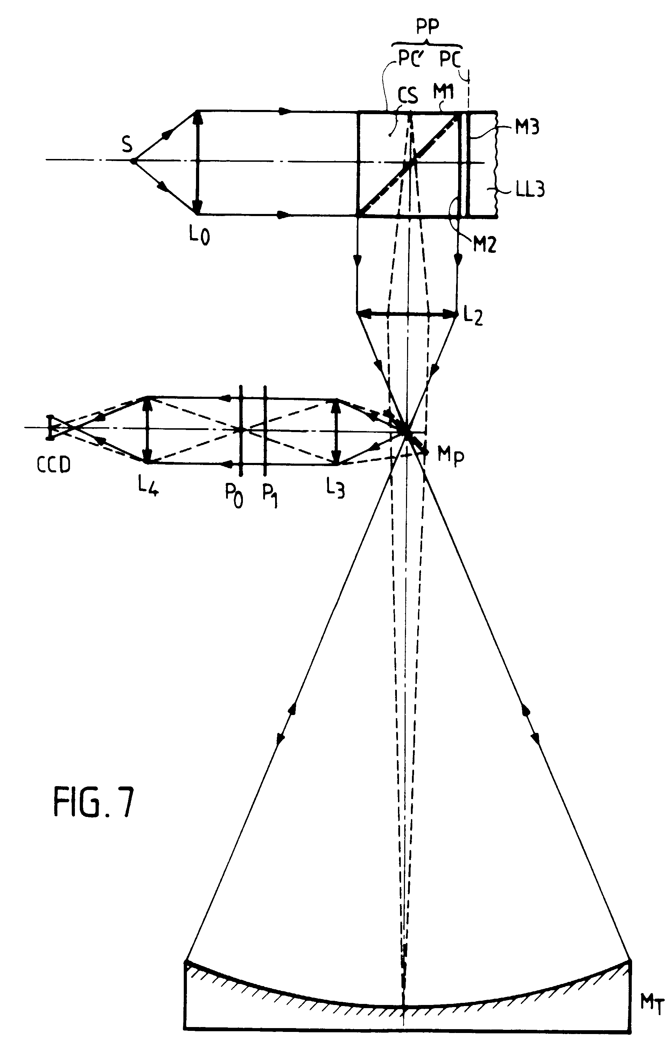

Le faisceau de lumière parallèle issu de la lentille L0 est appliqué à un échantillon à tester E. Sur la figure 1, l'échantillon est représenté comme une lame à face parallèle. Ce peut naturellement être tout autre système optique, ou même simplement une zone d'un milieu gazeux ou liquide qui est perturbée par un écoulement, par exemple. S'agissant d'un système optique, celui-ci peut, dans une application intéressante, être un miroir, en particulier un miroir de télescope. Dans le cas d'un miroir, les trajets des rayons sont par exemple ceux de la figure 7.

On définit un plan d'analyse PA au niveau de l'échantillon E. Un système afocal constitué par exemple de deux lentilles L1 et L2 réalise une adaptation du diamètre du faisceau au diamètre de la face d'entrée du système interférométrique I situé en aval, et opérant par réflexion spéculaire (de préférence par réflexion vitreuse). A ce système afocal est ajoutée une lentille de champ Lc, qui permet de créer une image du plan d'analyse PA en un plan de partition PC.

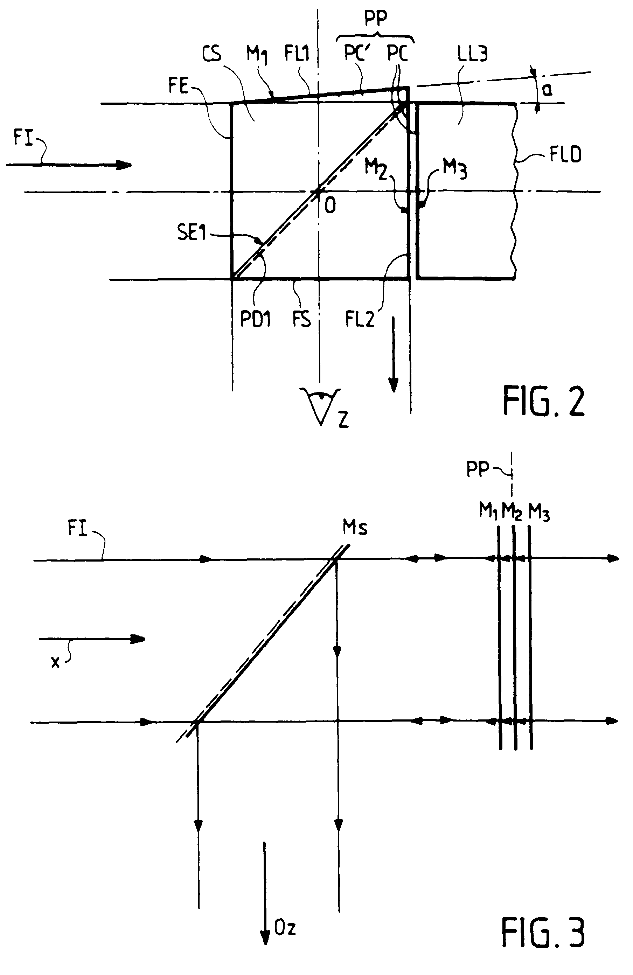

La figure 2 illustre plus en détail un premier mode de réalisation de l'interféromètre I. Il est constitué d'un cube séparateur CS, associé à une lame plane LL3.

Le cube séparateur CS, réalisé dans un milieu transparent pour la longueur d'onde de travail, tel que la silice pour le visible, est constitué de deux demi-cubes de même taille accolés sur leur plan diagonal PD1, de telle manière que celui-ci définit un dioptre semi-transparent SE1. La face d'entrée FE du cube est l'une des faces latérales (c'est-à-dire non perpendiculaires à ce plan diagonal). Une autre face latérale FL1 est inclinée ("tilted") d'un angle "a" choisi, par rapport à la forme cubique pure. Une telle face latérale inclinée peut être obtenue par repolissage du cube après son assemblage. Cette face FL1 définit un premier dioptre partiellement réfléchissant M1.

L'autre face latérale FL2, située à l'opposé de la face d'entrée FE, définit un second dioptre partiellement réfléchissant M2.

A l'extérieur du cube, et à proximité immédiate de ce dioptre M2, la face d'entrée de la lame LL3 définit un troisième dioptre partiellement réfléchissant M3. De préférence, la face FLD située à l'opposé est dépolie et/ou inclinée et/ou traitée anti-reflet pour éviter tout retour parasite de rayonnement. Plus généralement, les dioptres autres que M1, M2, M3 peuvent être traités afin d'éviter les réflexions secondaires parasites. Toutefois, cette précaution n'est pas nécessaire si le facteur de réflexion vitreuse (c'est à dire sans traitement optique) du matériau constitutif est suffisamment faible.

La lame LL3 est placée dans une monture mécanique possédant deux axes de rotation non-colinéaires dans le plan perpendiculaire à l'axe du faisceau incident (direction FI). Cette monture mécanique est rendue solidaire du support du cube CS. Par ailleurs, on fait en sorte que le dioptre M3 reste situé aussi près que possible du dioptre M2, de façon que l'on puisse considérer comme sensiblement égaux les trajets optiques des ondes réfléchies par les trois dioptres M1, M2 et M3.

La dernière face FS du cube CS est la face de sortie du rayonnement, dans la direction Z.

Si l'on revient maintenant à la figure 1, le rayonnement issu vers le bas de la face de sortie FS du cube CS est appliqué à un système de prise de vue ou "imageur", qui peut être constitué d'une lentille L3 formant objectif, placée pour produire une image du plan d'observation distant d'une valeur connue (L) des plans des trois dioptres M1, M2 et M3 (M2 et M3 étant sensiblement confondus). Ce système PDV peut être simplement constitué d'une caméra vidéo classique, montée sur un support mobile en translation selon l'axe Z.

Comme on le verra plus loin, la surface sensible du détecteur D réalise un échantillonnage spatial du plan d'observation sur lequel la caméra est mise au point. Le nombre de points d'échantillonnage peut être adapté en intervenant au niveau de la lentille L2 et de l'objectif L3. La sensibilité ainsi que la dynamique du système sont optimisées en déplaçant l'ensemble L3,D en translation.

La caméra PDV fournit des signaux électroniques représentatifs de l'image perçue par sa surface détectrice D. Ces signaux électroniques sont appliqués à une unité de traitement UT, avantageusement associée à une mémoire d'images (MI).

Incidemment, il est précisé que, sur la figure 1, les trajets des rayons lumineux sont représentés pour le cas particulier où L = 0 (plan d'observation confondu avec les plans des trois dioptres M1, M2 et M3).

Une variante intéressante est illustrée sur la figure 3.

Selon cette variante, le dioptre semi-transparent SE1 est réalisé par une membrane MS, tandis que les trois autres dioptres sont réalisés par trois membranes M1, M2 et M3, placées très proches les unes des autres, perpendiculairement à la direction de transmission du faisceau incident à travers la membrane MS (aux angles de basculement près).

Les trois membranes M1, M2 et M3 sont placées dans des montures mécaniques permettant leur inclinaison relative suivant des axes non-colinéaires, afin d'obtenir à la fois des basculements latéraux et des décalages entre les trois répliques de l'onde incidente analysée. Là encore, ces montures sont agencées de telle sorte que l'on minimise les allongements des trajets optiques entre les différentes réflexions et le plan d'analyse.

Les trois membranes M1, M2 et M3 sont par exemple réalisées à l'aide de films de nitrocellulose, pour le visible, (disponibles en France notamment auprès de la Société MELLES-GRIOT), placés côte à côte à l'intérieur d'une enceinte de gaz neutre (pour éviter des effets microphoniques) munie d'une fenêtre d'entrée convenable, et à l'intérieur de laquelle est logée la monture d'ajustement de ces trois dioptres M1, M2 et M3.

Par ailleurs, et dans les deux modes de réalisation décrits, il est nécessaire que l'écart (en termes de longueurs de trajets de faisceaux) entre les différents trajets possibles demeure inférieur à la longueur de cohérence de la source monochromatique utilisée.

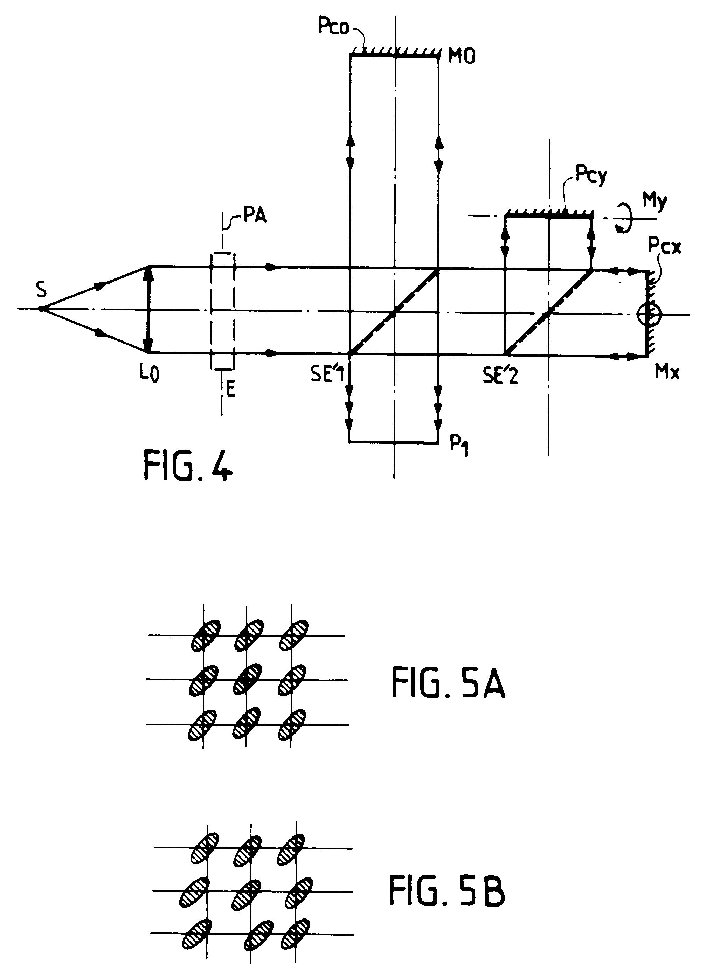

On décrira maintenant de façon plus détaillée le mode de fonctionnement des dispositifs selon l'invention. A cet effet, il est fait référence au schéma optique de principe de la figure 4.

Sur la figure 4, on retrouve la source lumineuse S et la lentille collimatrice L0, dont le rayonnement de sortie traverse l'échantillon E. Une première lame séparatrice SE'1 renvoie transversalement une partie du rayonnement vers un premier réflecteur M0. Le rayonnement qui la traverse est repris par une seconde lame séparatrice SE'2, qui en transmet une partie vers un deuxième miroir Mx, tout en réfléchissant une autre partie de ce faiseau vers un troisième miroir My.

Les rayonnements renvoyés par tous les miroirs subissent un trajet inverse (à un décalage angulaire près, comme on le verra ci-après).

Ils reviennent ainsi vers la face arrière de la lame SE'1, qui les renvoie vers un plan d'observation P1.

Dans ce schéma de principe, on suppose pour simplifier que le miroir M0 est perpendiculaire à l'axe optique du faisceau qui le frappe. Les miroirs Mx et My sont tournés selon des angles a1 et a2, autour des axes X et Y respectivement (les axes X et Y sont deux axes orthogonaux entre eux et à la direction d'observation Z.

Comme précédemment, le montage est ajusté de sorte que la longueur des trajets optiques de la source S au plan d'observation P1 soit sensiblement la même quel que soit le trajet subi par le faisceau.

Cela signifie qu'il existe au sein de l'échantillon un plan d'analyse PA ; à celui-ci correspondent trois plans de partition PC0, PCx et PCy, qui sont " images " les uns des autres par l'intermédiaire des lames semi-transparentes SE'1 et SE'2. Le mot "image" est utilisé ici, bien qu'il n'y ait pas de rayons lumineux qui vont de l'un à l'autre des trois plans de partition; en fait, les lames semi-transparentes SE'1 et SE'2 font que les trois plans sont optiquement ramenés au même endroit, si l'on se place en P1, ou encore au niveau de la source S. Le dioptre SE1 a le même effet dans le cas de la figure 2.

Les deux miroirs Mx et My sont tournés selon des angles choisis. Compte tenu de la distance entre ces miroirs et le plan d'observation P1 (distance prise le long des trajets optiques, et notée L), cette rotation a les effets suivants :

- les ondes A0, Ax et Ay provenant des trois miroirs vont interférer au niveau du plan P1 ;

- ces ondes vont se trouver inclinées différemment en raison des légères rotations angulaires subies par les miroirs Mx et My ;

- ces ondes seront décalées transversalement d'une quantité proportionnelle à leur angle de rotation respectif et à la longueur L.

Lorsque l'échantillon E est sans défaut (ou absent), la figure d'interférence obtenue dans le plan P1 (figure 5A) est constituée d'un maillage régulier de taches identiques en forme d'ellipses, toutes inclinées parallèlement à une même diagonale, dans le cas où les axes de rotation des miroirs MX et MY sont perpendiculaires.

Lorsque l'échantillon E induit un défaut de phase sur la surface d'onde, la figure d'interférence obtenue dans le plan P1 (figure 5B) est constituée de taches qui ne sont plus régulièrement disposées sur le maillage ni identiques.

L'analyse de cette nouvelle figure d'interférence permet la mise en évidence des gradients de la surface d'onde.

On revient maintenant aux modes de réalisation des figures 1 à 3.

Là aussi, lorsque l'échantillon E est sans défaut, la figure d'interférence observée ressemble au dessin de la figure 5A (si les axes de rotation des miroirs M1 et M3 sont perpendiculaires, le miroir M2 étant supposé non tourné).

En présence de défauts ou perturbations du front d'onde au niveau de l'échantillon E, on obtient aussi une structure de points modifiée comme illustré sur la figure 5B.

Mais il faut ici tenir compte de la mise au point effectuée par la caméra PDV.

La simple observation à l'oeil nu de l'image délivrée par celle-ci peut être conduite, en faisant varier la mise au point. Pour l'explication, on part d'une mise au point exacte dans les plans de partition PC et PC'(images l'un de l'autre), puis on s'en écarte progressivement.

A la mise au point exacte, on obtient en principe un maillage régulier d'ellipses ou cercles d'interférence, de façon semblable à ce qui a été vu à propos de la figure 5A (sous réserve d'éventuels défauts optiques de l'appareil).

En mettant au point légèrement en amont ou en aval des plans PC et PC' (respectivement en aval ou en amont sur le trajet retour des faisceaux), on voit progressivement apparaître des perturbations qui représentent les défauts de la surface d'onde optique, et peuvent être analysées par l'homme de l'art.

Toutefois, il est bien entendu préférable de conduire cette analyse d'une manière automatique, avec l'assistance de moyens de traitement appropriés.

Ces moyens de traitement font intervenir des processus physiques et mathématiques sophistiqués. Il est plus simple de les décrire en référence à des basculements des miroirs selon deux axes perpendiculaires (figure 4), bien qu'il ne s'agisse pas du mode de réalisation préféré. Il est maintenant fait référence à l'Annexe de formules ajoutée à la présente description.

Les relations (I) de cette annexe donnent tout d'abord les valeurs des amplitudes lumineuses A0, A1 et A2, en fonction de coordonnées x et y prises dans le plan normal à la figure, respectivement pour les miroirs M0, Mx et My. Dans ces relations:

- i désigne le symbole habituel des imaginaires ;
- W (x,y) désigne la phase de la surface d'onde en fonction de x et de y ;
- a1 et a2 désignent les valeurs angulaires des rotations en radians, respectivement autour de l'axe Y et de l'axe X ;
- d1 et d2 désignent les décalages spatiaux dus à ces décalages angulaires au niveau du plan d'observation P1, c'est-à-dire après franchissement de la longueur L sur les trajets retour.

Les relations (II) expriment les mêmes quantités que les relations (I), avec:

- la simplification que a1 = a2 = a et d1 = d2 = d ;
- une approximation du premier ordre de la fonction de phase W(x,y), ce qui suppose que la valeur de d = d1 = d2 est faible (devant la valeur des gradients à détecter).

L'équation du front d'onde dans le plan P1 d'observation, AP1(x,y), est alors donnée par la relation (III), où les notations sont les mêmes que pour les relations (II).

Cette relation (III) définit l'amplitude de l'onde. Mais les détecteurs lumineux sont quadratiques, c'est-à-dire qu'ils mesurent une intensité et non pas une amplitude complexe. Cette intensité IP1(x,y) est égale au produit de la quantité de la relation (III) par sa conjuguée complexe, exprimé dans les relations (IV).

Sa transformée de Fourier, TF(IP1), est alors donnée par les relations (V), où les coordonnées u et v correspondent aux coordonnées x et y de l'espace réel.

Dans les relations (V), la quantité 3.delta(u,v) définit un fondamental. Les six autres quantités définissent six harmoniques, (réunissables en trois couples de deux harmoniques). Le symbole "*" désigne un produit de convolution. Delta() est la distribution dite de Dirac.

Enfin, les relations (VI) désignent un par un ces harmoniques, en les notant pour simplifier q(1) à q(6).

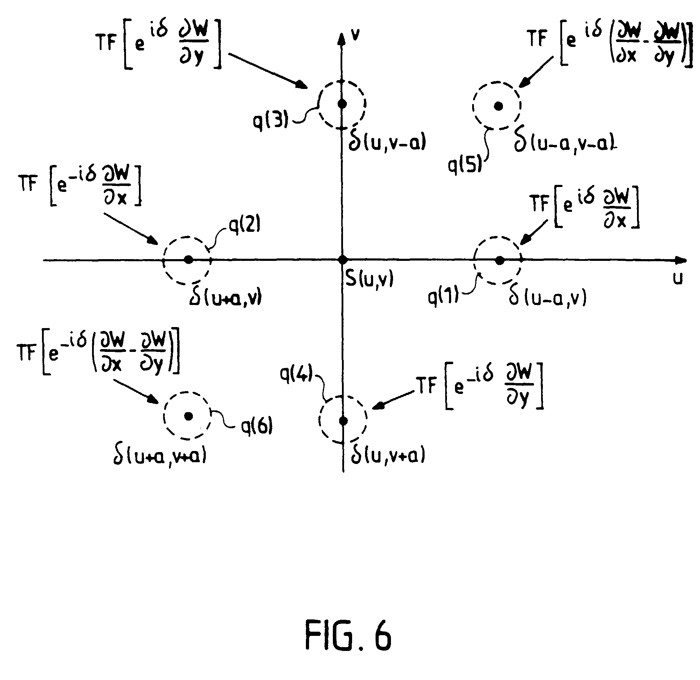

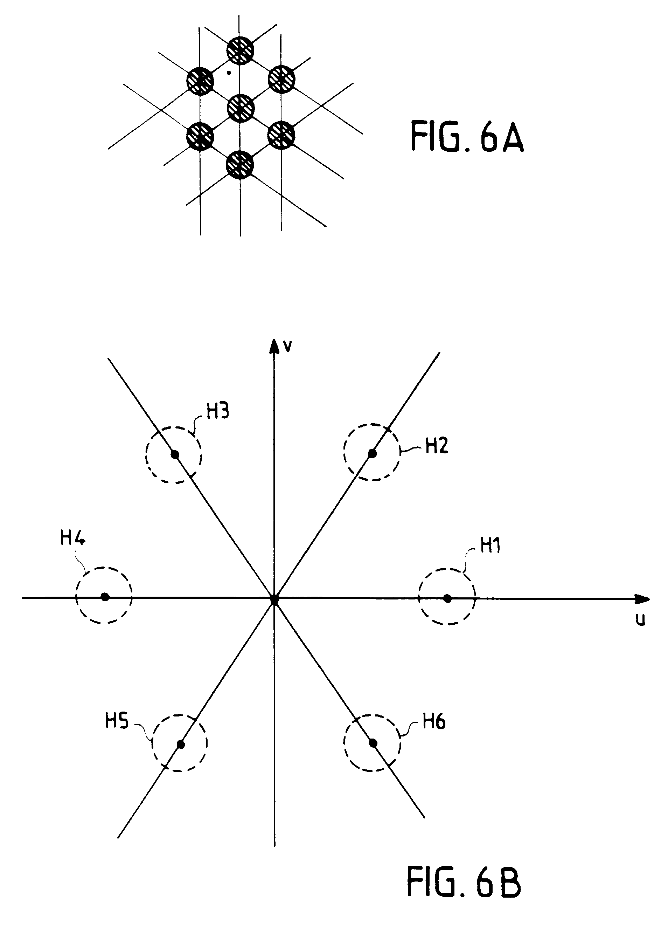

La figure 6 fait apparaître ces harmoniques dans le plan de Fourier.

En résumé, le Demandeur a observé que, du fait des rotations subies par le faisceau de base au niveau des trois dioptres principaux, la transformée de Fourier des intensités lumineuses mesurées au niveau du plan d'observation P1 est constituée de trois fois deux harmoniques, chacun de ces couples d'harmoniques étant lié à l'interférence de deux des trois ondes. De son côté, la fréquence centrale est liée au contour de la fenêtre d'observation dans le plan d'analyse.

Chacun des six harmoniques est filtré, pour l'isoler des autres. L'homme de l'art sait que les deux harmoniques d'un même couple (symétriques par rapport au fondamental) portent les mêmes informations. Il suffit donc de considérer trois harmoniques filtrés, qui sont ensuite traités indépendamment.

A chacun de ces harmoniques filtrés, on fait subir une transformée de Fourier inverse par rapport à son centre, ce qui fournit l'information de gradient correspondant à cet harmonique. Le centre de l'harmonique peut être prédéfini, à partir de l'angle d'inclinaison des deux dioptres qui en sont la cause. On peut également choisir une norme (module de l'amplitude complexe, carré de ce module, maximum de l'amplitude complexe), et retenir comme centre le barycentre de l'harmonique selon cette norme. Ceci ne donne pas nécessairement le même centre. Mais un traitement différentiel (voir plus loin) permet de s'affranchir d'une telle imprécision.

En d'autres termes, chaque harmonique dans le plan de Fourier représente, pour l'ensemble des défauts recherchés, l'amplitude de ce défaut dans une direction donnée de l'espace réel, c'est-à-dire la composante du gradient dans cette direction. En isolant l'harmonique et en procédant à la transformée de Fourier inverse, on retrouve donc la composante du gradient recherchée.

Une autre remarque est à faire. L'examen de la figure 6 a conduit le Demandeur à penser que les harmoniques ainsi obtenus réalisent un pavage irrégulier du plan complexe. Cela est dû au fait que les deux angles de rotation des deux dioptres sujets à basculement sont supposés définis autour d'axes perpendiculaires.

Il est estimé actuellement comme hautement préférable d'effectuer les rotations sur les trois dioptres et autour de trois axes à 120°.

Dans le mode de réalisation de la figure 2, ces axes de rotation peuvent être obtenus comme suit: on considère que les trois dioptres M1, M2 et M3 sont optiquement ramenés au même endroit, par exemple en M2. On note M1* (non représenté) le plan "image" de M1 au niveau de M2. On note M3* (non représenté) le plan de M3, légèrement décalé pour venir au niveau de M2. Les plans M1* et M2 (sujets à une inclinaison relative, due à M1) se coupent selon un premier axe. Les intersections des plans M1* et M3* d'une part, M2 et M3* d'autre part, définissent deux autres axes, cosécants avec le premier axe. La lame LL3, mobile suivant deux directions, peut prendre la position permettant à ces trois axes d'être régulièrement distribués à 120° dans la plan de M2.

En ce qui concerne le mode de réalisation de la figure 3, il suffit de réaliser une monture convenable pour les trois membranes réfléchissantes M1, M2 et M3.

Dans ce cas, les taches que l'on observe sont illustrées sur la figure 6A. La figure 6B montre la position des trois couples d'harmoniques correspondants dans le plan complexe. L'homme de l'art comprendra que cette disposition à 120° réalise la meilleure répartition dans le plan de Fourier. Dans ce cas, les taches d'interférence se rapprochent de la forme circulaire.

Ce qui précède s'applique aux deux modes de réalisation de l'invention (interféromètres des figures 2 et 3).

Dans le cas de la figure 2, les rayons lumineux réfléchis sur le dioptre incliné M1 vont transiter d'abord à l'intérieur du cube CS, puis sortir de celui-ci. Au passage de la face de sortie FS, ils subissent une réfraction. L'angle d'inclinaison 'a' de la face M1 du cube doit donc être corrigé en fonction de l'indice optique n du matériau constitutif du cube selon la formule suivante

$$a' = 2.n.a$$

et a' est la valeur prise pour l'angle d'inclinaison du faisceau lumineux réfléchi sur le dioptre M1, à la sortie de la face FS du cube.

Par ailleurs, lorsque l'image analysée correspond au plan de référence P0 conjugué des plans des miroirs M1, M2 et M3, le décalage de position d des équations (I) à (IV) est nul. Dans ces conditions, l'invention permet de déterminer les éventuels défauts optiques qui peuvent être introduits par les miroirs M1, M2 et M3 eux-mêmes. En d'autres termes, cette première acquisition d'image permet de calibrer les défauts relatifs entre les trois surfaces d'ondes dues aux trois dioptres M1, M2, M3 et ainsi de supprimer leur effet sur la mesure du défaut de phase intéressant.

Au fur et à mesure que la caméra est déplacée par translation sur l'axe Z (s'écartant donc du plan P0), la valeur du paramètre d augmente. Ceci augmente en même temps la sensibilité aux défauts de la surface d'onde étudiée ; en contrepartie, la dynamique utile diminue.

Lorsque la translation de la caméra atteint une longueur telle que les taches d'interférence observées se recouvrent, ou bien sont mal échantillonnées par les pixels du détecteur, la mesure devient difficile, voire impossible.

Des montages tels que celui de la figure 2 impliquent que l'un des dioptres est légèrement décalé axialement. Etant faible, ce décalage peut être négligé dans le traitement. Si nécessaire, l'homme de l'art sait introduire des facteurs correctifs dans les relations invoquées ci-dessus, compte tenu de la précision désirée.

Jusqu'à présent, la description s'intéresse à la mise en évidence des gradients de phase de la surface d'onde. A cet effet, on considère les images d'interférence obtenues une à une.

Une variante avantageuse permet d'accéder non seulement à ces gradients, mais aussi aux courbures locales de la surface d'onde.

Ceci suppose la considération simultanée d'au moins deux images, et sera maintenant décrit en référence aux formules (VII) à (XIV) figurant dans l'annexe à la présente description.

La relation (VII) est l'équation de transfert en intensité de la surface d'onde. On y retrouve des symboles de dérivées partielles, ainsi que le symbole habituel "nabla" du gradient, et son élévation au carré, qui symbolise le Laplacien. Enfin, k désigne le nombre d'onde, I est l'intensité lumineuse (fonction de x et y), et W est la phase relative à l'amplitude complexe A (W est également fonction de x et y).

Le premier membre de cette relation (VII) représente la variation que subit l'intensité I lorsque l'on se déplace de dz dans la direction z (direction de propagation). Ceci correspond à l'évolution de la surface d'onde d'une première image à une seconde image voisine.

Au second membre de la relation (VII), le premier terme représente l'effet de l'inclinaison locale de la surface d'onde prise dans la première image sur ce qu'on va obtenir dans la seconde image (effet dit "prismatique"). Le second terme représente l'effet de la courbure locale de la surface d'onde prise dans la première image sur ce qu'on va obtenir dans la seconde image (effet dit "de lentille").

Ceci est développé dans l'Article "Phase retrieval based on the irradiance transport equation and the Fourier transform method : experiments", Kazuichi ICHIKAWA, Adolf W. LOHMANN and Mitsuo TAKEDA, Applied Optics, Vol. 27 N° 16, 15 Août 1988.

Ici, la mise en interférence de faisceaux diversement inclinés réalise une "modulation d'intensité" liée à la surface d'onde. A cause de cette modulation, le passage par une transformation de Fourier (similaire à ceui décrit plus haut) permet d'isoler les gradients des courbures locales.

Après la transformation de Fourier inverse, on obtient pour chaque harmonique :

- la courbure locale dans sa partie réelle,
- une composante du gradient dans sa partie imaginaire.

On étudie alors l'évolution de la surface d'onde entre un plan P0 et un plan PL. Une difficulté surgit : il faut faire intervenir une amplitude A0 qui est la somme des amplitudes complexes des trois ondes considérées.

Mais le Demandeur a observé:

- d'une part que cette quantité A0 n'intervient plus dès lors que l'on s'intéresse seulement aux effets de la "modulation" évoquée ci-dessus, c'est à dire à une variation d'intensité point par point "Delta I" entre les plans P0 et PL, telle que définie par les relations (VIII),
- d'une autre part que la relation (IX) est satisfaite dans le plan P0, tandis que s'y applique la relation (IV), avec annulation des dérivées partielles de W en x et y,
- d'autre part enfin que si la surface d'onde analysée est plane, son intensité se conserve globalement entre les plans P0 et PL.

Dans ces conditions, l'expression de la variation de l'intensité entre les plans P0 et PL est donnée par la relation (X), où:

- W0 désigne la phase relative à l'amplitude complexe A0 (la somme des amplitudes complexes des trois ondes considérées),
- W désigne la phase à analyser, et
- WP0 désigne la phase de référence dans le plan P0.

Compte-tenu des formules (I) à (IV), l'expression (V) conduit à la relation (XI), qui explicite la variation d'intensité, delta I, recherchée.

L'homme de l'art comprendra qu'il s'agit ici une nouvelle fois (comme pour la relation (IV)), d'une expression dont la transformée de Fourier va comporter un fondamental et six harmoniques (ou bien trois couples d'harmoniques).

On effectue alors les mêmes opérations que précédemment, c'est-à-dire un filtrage des harmoniques, un recentrage de chaque harmonique filtré, puis une transformation de Fourier inverse.

Comme exprimé dans les relations (XII), la partie réelle est à chaque fois le Laplacien de la fonction de phase W de la surface d'onde (multiplié par trois dans le cas du fondamental). La partie imaginaire correspond aux gradients en x et en y de la même fonction W, ainsi qu'à la différence entre ces deux gradients.

Les mêmes remarques que plus haut sont à faire; d'une part, des angles à 120° sont préférables; d'autre part, on peut négliger l'écart de l'un des dioptres, ou le corriger.

En effectuant donc ainsi la mesure en deux plans distincts suivant l'axe Z, il est possible de retrouver non seulement les gradients mais aussi les courbures locales de la surface d'onde. On obtient donc deux fois plus d'informations. Et, pour un même nombre de points de mesure, il est possible de reconstruire, par un traitement approprié, un nombre de points de phase deux fois plus élevé.

Dans ce qui précède, l'une des deux mesures est effectuée dans le plan P0, qui présente l'avantage que la mesure est constante dans le temps, puisqu'elle ne dépend pas de la surface d'onde elle-même, mais seulement des défauts des miroirs M1, M2, M3. Cela est vrai même si le phénomène étudié est évolutif (sauf d'éventuels problèmes de scintillation optique). Cette mesure dans le plan P0 peut être enregistrée une fois pour toutes en mémoire. Et l'on fait alors une différence avec chacune des mesures effectuées ensuite dans le plan PL, en fonction de l'évolution du système optique considéré.

Les problèmes de scintillation évoqués ci-dessus peuvent d'ailleurs être également pris en compte, si l'on place un deuxième détecteur suivant l'axe Z, mais dans la direction opposée à celle de la caméra, c'est-à-dire vers l'arrière du miroir M1. Dans ce cas, le miroir M1 ne peut être totalement réfléchissant.

Mais, plus généralement, il est envisageable d'effectuer ces deux mesures dans deux plans situés à des distances L différentes du plan P0, et d'effectuer alors à chaque fois un traitement différentiel des deux mesures comme indiqué ci-dessus.

L'homme de l'art comprendra que le système ici décrit est à la fois facile à réaliser et- facile à adapter pour différentes configurations. Il est en effet composé d'éléments simples, tant sur le plan optique que sur le plan mécanique. Il ne nécessite donc aucun développement technologique particulier, contrairement aux systèmes fondés sur des réseaux de diffraction ou des grilles de micro-lentilles ou des masques.

Cette facilité de réalisation et cette polyvalence sont en particulier intéressantes en ce qui concerne l'analyse de surface d'onde en infrarouge. Lorsque l'on procède au contrôle optique d'un miroir, un premier contrôle est souhaitable en phase de "doucissage". A ce stade, le miroir est trop diffusant pour permettre une analyse de sa surface dans le domaine des rayonnements visibles. Le dispositif selon l'invention peut alors être utilisé avec une source de lumière dans l'infrarouge. Bien entendu, le cube séparateur et la lame LL3 doivent être réalisés dans un milieu transparent pour le domaine de longueur d'onde infrarouge considéré.

La phase finale du contrôle du miroir peut s'effectuer dans le domaine du visible, comme à l'accoutumée.

Une autre particularité de l'invention est que le dispositif proposé présente une dynamique et une sensibilité qui sont réglables à volonté par simple translation de la caméra. Ceci procure un avantage considérable par rapport à des moyens tels que les"détecteurs de Hartmann-Shack", pour lesquels par exemple un changement de sensibilité implique la réalisation d'une nouvelle grille de micro-lentilles.

En d'autres termes, le système de l'invention permet l'étude de phénomènes dont on ne connaît pas a priori l'importance, ou dont cette importance peut être appelée à évoluer en cours de travail. C'est notamment le cas dans les applications d'aide à la réalisation d'une surface optique.

Si l'on compare maintenant le système ici proposé aux autres types d'interféromètres à décalage latéral, l'avantage essentiel est manifeste : ces derniers n'effectuent qu'une mesure de gradient dans une direction pour un détecteur. La connaissance de deux gradients croisés impliquerait la division du faisceau d'analyse afin de permettre l'implantation d'un deuxième détecteur.

Au contraire, selon l'invention, les trois gradients et éventuellement la courbure locale sont disponibles à partir d'une seule mesure. Ceci est très avantageux, en particulier au niveau des possibilités de correction de la mesure.

La mesure unique selon l'invention procure en effet la connaissance d'un troisième gradient (trois directions de mesure sont disponibles). La disponibilité de ce troisième gradient permet l'estimation de l'erreur sur la mesure, à partir de cette mesure elle-même (car la somme des trois gradients est nulle par principe). Il est alors particulièrement intéressant d'en tenir compte, lorsque l'on cherche à reconstruire la surface d'onde par intégration ou double intégration, à partir des valeurs de gradients ou de courbures, respectivement, que la mesure unique (cohérente) selon l'invention fournit.

Il est rappelé également que le dispositif proposé permet une mesure précise de la phase. Cette mesure peut s'effectuer même en présence de fortes variations locales de phase, en particulier à l'aide du mode de réalisation de la figure 3.

Ceci rend le dispositif selon l'invention particulièrement intéressant lorsqu'il s'agit de contrôler des systèmes optiques où l'on considère des couples de points (point source, point d'analyse) qui sont éloignés du stigmatisme optique. C'est le cas en particulier pour les miroirs de télescope, qui sont des miroirs quasi-paraboloïdes de grande ouverture. Dans un tel cas, il est matériellement impossible d'effectuer des mesures entre deux points optiquement stigmatiques par rapport au miroir. La pratique actuelle consiste à effectuer les mesures entre le centre de courbure du miroir et lui-même. Mais, celui-ci n'est pas stigmatique de lui-même. Ce qu'on fait actuellement est alors de prévoir un correcteur d'aberration sphérique, couramment dénommé "null lens". Le dispositif de la présente invention peut opérer directement, sans nécessiter une telle compensation, comme on le verra plus loin.

Dans un mode de réalisation particulier de l'invention, concernant le cas de la figure 2, on a utilisé un cube séparateur en silice de 40 mm de côté, et une lame en silice de 60 mm de diamètre pour environ 10 mm d'épaisseur. La face arrière de la lame a été dépolie afin d'éviter toute réflexion parasite. L'une des faces du cube a fait l'objet d'un polissage de reprise pour introduire l'angle voulu entre les ondes provenant des deux faces utiles du cube. Les deux faces dirigées respectivement vers la source et vers la caméra ont été traitées par un dépôt anti-reflet type ANTIVEX de la société M.T.O. (MASSY, FRANCE) pour éviter tout système de franges parasites. L'inclinaison de la lame LL3 a été contrôlée à partir d'une monture mécanique (Société MICROCONTROLE, EVRY, FRANCE) possédant deux axes de rotation qui définissent un plan placé en arrière de la face utile afin de pouvoir rapprocher au plus près celle-ci de la face M2 du cube. Pour une bonne stabilité de l'ensemble lame-cube, il est souhaitable que cette monture soit solidaire de la monture du cube.

Le plan d'analyse est observé à l'aide d'une caméra de type CCD, munie d'un zoom de 50-100 mm de focale ouvert à F/2 environ, et pourvu d'une mise au point réglable. Ceci permet de changer le grandissement, et adapter ainsi l'échantillonnage des taches d'interférence observées à la taille des pixels détecteurs de la caméra.

Matériellement, le système optique collimateur d'entrée et la caméra sont placés sur deux rails perpendiculaires, au croisement desquels est placé l'ensemble rigide mécaniquement (cube, lame). Le collimateur permet d'obtenir un faisceau de lumière parallèle d'environ 60 mm de diamètre. Le système afocal (L1, L2) est placé dans le montage pour adapter ce diamètre du faisceau de lumière parallèle à la pupille d'entrée de la caméra, ce qui correspond à un grandissement d'environ un tiers.

La lentille LC ajoutée au système afocal permet de recréer une image de la pupille d'analyse sur les faces utiles du cube et de la lame, c'est-à-dire les plans des miroirs M1, M2 et M3.

L'homme de l'art sait réaliser par informatique les traitements définis plus haut, remarque étant faite que les étapes individuelles de ces traitements sont décrites :

- pour les gradients dans l'article "New optical testing methods developed at the University of Hawaii: results on ground-based telescopes and Hubble Space Telescope", RODDIER et al, Proceedings of SPIE, Vol. 1531, San Diego, 22-23 juillet 1991 ;

- pour les courbures dans l'article de ISHIKAWA et al déjà cité.

On utilise une transformée de Fourier discrète, de préférence de type Transformée de Fourier Rapide.

Dans le mode de réalisation qui précède, il est estimé préférable que les miroirs ne soient pas totalement réfléchissants, et aussi que la face arrière de lame LL3 soit dépolie. Une variante consiste ici à basculer cette face arrière de la lame LL3 d'un angle suffisamment important pour éviter que le faisceau de retour n'aboutisse sur le détecteur, ou bien de la traiter par un dépôt anti-reflet pour la longueur d'onde utilisée.

On décrira maintenant une autre variante intéressante de l'invention. Elle concerne le cas de très fortes variations de phase par rapport à la surface d'onde idéale, qui est en principe la surface d'onde plane.

En pareil cas, l'ouverture de l'objectif de la caméra peut être insuffisante pour permettre de récupérer tous les rayons lumineux interceptant le plan d'analyse.

La variante proposée consiste à introduire une lame diffusante qui matérialise ce plan, et permet d'analyser totalement la figure d'interférence à son niveau. (Ceci diminue naturellement le rendement lumineux). Cette lame est réalisée dans un matériau adapté à la longueur d'onde de travail. Elle est dépolie, et placée dans une monture translatable solidaire de la caméra.

Ce type de montage présente l'avantage de conserver la possibilité d'ajuster simplement la dynamique et la sensibilité de l'appareil par translation de l'ensemble caméra et diffuseur. En contrepartie, il n'est plus possible physiquement de pointer le plan optique de visée de la caméra au niveau du plan où a lieu le détriplement de l'onde, c'est-à-dire des trois plans conjugués optiquement des miroirs M1, M2 et M3.

On décrira maintenant d'autres variantes. A cet effet, il est fait référence à la figure 7.

L'application concernée est l'examen de la qualité optique d'un miroir de télescope MT. Indépendamment de cela, la figure 7 illustre une variante intéressante de l'invention, où l'on échange les positions du plan d'analyse et du plan de partition. En effet, sur la figure 7, on part d'une source S collimatée par une lentille LO, pour appliquer cette lumière directement au cube séparateur CS. C'est donc la lumière de la source qui est, par ce cube CS, convertie en trois faisceaux non colinéaires, c'est-à-dire légèrement inclinés l'un sur l'autre deux à deux (le degré d'inclinaison admissible dépend de la taille de la zone dans laquelle les trois faisceaux doivent interférer. La lumière ainsi obtenue est reprise par une lentille L2, pour illuminer le miroir de télescope MT.

Les rayonnements renvoyés par le miroir de télescope MT sont repris par la lame semi-transparente (ici une membrane pelliculaire Mp), pour être appliqués à une lentille de sortie L3, qui crée une image dans le plan de référence P0. Le plan d'observation est un plan PL voisin de P0. Le reste du dispositif d'observation de la figure 1 est ici schématisé par la lentille L4 et le capteur CCD.

Cette variante montre également que le mot "plan" peut aussi couvrir selon l'invention une surface légèrement courbe, comme l'est la surface d'un miroir de télescope.

Le point où l'axe du faisceau qui illumine le miroir MT coupe la lame ou dioptre auxiliaire Mp est le centre de courbure CC du miroir de télescope (calotte de paraboloïde) MT. On voit apparaître ici un autre avantage extrêmement important de l'invention : avec un miroir paraboloïde, les seuls points qui sont à la fois conjugués et optiquement stigmatiques l'un de l'autre sont le foyer de la parabole et l'infini; bien entendu, il est matériellement impossible de vérifier le miroir entre ces deux points. La pratique veut donc que l'on opère entre le centre de courbure du miroir CC et lui-même; mais, si le centre de courbure d'une parabole (le centre du cercle qui approxime la section de parabole concernée) est bien conjugué de lui-même par rapport au segment de parabole, par contre il n'est pas optiquement stigmatique de lui-même. De là le fait que les techniques en vigueur jusqu'à présent nécessitent la mise en place des "null lens" déjà mentionnés.

Le dispositif selon l'invention offre l'avantage essentiel de pouvoir fonctionner sans aucun dispositif du genre "null lens", qui sont des correcteurs de l'aberration sphérique due au fait que le centre de courbure CC n'est pas optiquement stigmatique de lui-même.

Le montage qui vient d'être décrit peut être considéré comme produisant l'illumination du miroir de télescope par trois points-sources en phase.

Le fait de placer le cube séparateur CS et la lame auxiliaire définissant le dioptre M3 dans la lumière de la source, non modifiée, présente ici l'avantage que ce cube opère sur des faisceaux parallèles, donc sans introduire d'aberration. Il en serait différemment s'il était placé dans les rayons (non parallèles) revenant du miroir de télescope MT.

La lentille L2 a plusieurs rôles :

- focaliser les faisceaux, issus des trois dioptres M1, M2, M3, au centre de courbure CC du miroir MT;
- conjuguer les trois dioptres M1, M2, M3 avec le miroir de télescope MT;
- éclairer ce même miroir MT avec l'ouverture angulaire convenable.

La lentille L3 a tout d'abord pour effet de rendre le faisceau émergent parallèle (aux aberrations introduites par MT près). Elle permet en outre de conjuguer optiquement les dioptres M1, M2, M3 et le plan de référence P0.

L'invention n'est pas limitée aux modes de réalisation décrits. Par exemple, elle s'applique non seulement à l'infra-rouge et au visible, mais aussi à l'ultra-violet, voire à d'autres fréquences d'ondes électromagnétiques, comme les rayons X.

Par ailleurs, entre l'observation à l'oeil nu et les traitements complets proposés, il existe d'autres types de traitement utilisables.

L'un de ceux-ci opère uniquement dans l'espace réel :

- on doit disposer d'une mesure de référence (sans le défaut à analyser), et d'une mesure "de travail";
- on détermine le décalage subi par les taches d'interférence homologues, en comparant la mesure de travail à la mesure de référence.

Ceci donne une "carte" des gradients locaux.

La mesure de référence peut être soit une mesure dans le même plan d'observation que pour la mesure de travail, mais en l'absence de l'échantillon (du défaut) analysé. Ce peut être aussi une mesure où l'on observe exactement dans le plan de référence, alors que la mesure de travail en est décalée.

Par ailleurs, l'invention prend tout son sens telle qu'elle a été décrite, avec trois faisceaux. Pour certaines applications, il serait envisageable de n'en utiliser que deux. Ce serait le cas par exemple si l'on disposait d'informations autres sur les gradients.

**Annexe Formules** (1)

(I)

$$A0(x,y) = \exp\ (i.W(x,y))$$

$$A1(x,y) = \exp\ (i.(W(x+d1,y) + a1.x))$$

$$A2(x,y) = \exp\ (i.(W(x,y+d2) + a2.y))$$

$$d1 = a1 \ . \ L$$

$$d2 = a2 \ . \ L$$

(II)

$$A0(x,y) = \exp\ (i.W(x,y))$$

$$A1(x,y) = \exp\ (i.(W(x,y) + d.\partial W/\partial x + a.x))$$

$$A2(x,y) = \exp\ (i.(W(x,y) + d.\partial W/\partial y + a.y))$$

$$d1 = d2 = d$$

$$a1 = a2 = a$$

(III)

$$AP1(x,y) = \exp(i.W(x,y)) \; .$$

$$[1 + \exp(i.(d.\partial W/\partial x + a.x)) + \exp(i.(d.\partial W/\partial y + a.y))]$$

(IV)

$$IP1(x,y) = AP1(x,y) \; . \; AP1^*(x,y)$$

$$IP1(x,y) = 3 + \exp(-i.(d.\partial W/\partial x + a.x))$$

$$+ \exp(-i.(d.\partial W/\partial y + a.y))$$

$$+ \exp(+i.(d.\partial W/\partial x + a.x))$$

$$+ \exp(+i.(d.\partial W/\partial y + a.y))$$

$$+ \exp(-i.(d.(\partial W/\partial x - \partial W/\partial y) + a.(x-y)))$$

$$+ \exp(+i.(d.(\partial W/\partial x - \partial W/\partial y) + a.(x-y)))$$

(V)

$$TF(IP1) = 3.\delta(u,v) + \delta(u-a,v) * TF(\exp(+i.d.\partial W/\partial x))$$

$$+ \delta(u+a,v) * TF(\exp(-i.d.\partial W/\partial x))$$

$$+ \delta(u,v-a) * TF(\exp(+i.d.\partial W/\partial y))$$

$$+ \delta(u,v+a) * TF(\exp(-i.d.\partial W/\partial y))$$

$$+ \delta(u-a,v+a) * TF(\exp(+i.d.(\partial W/\partial y - \partial W/\partial x)))$$

$$+ \delta(u+a,v-a) * TF(\exp(-i.d.(\partial W/\partial y - \partial W/\partial x)))$$

$$( * = \text{convolution} )$$

(VI)

| | |
|---|---|
| harmonique q(1): | $\exp(+i.d,\partial W/\partial x)$ |
| harmonique q(2): | $\exp(-i.d,\partial W/\partial x)$ |
| harmonique q(3): | $\exp(+i.d,\partial W/\partial y)$ |
| harmonique q(4): | $\exp(-i.d,\partial W/\partial y)$ |
| harmonique q(5): | $\exp(+i.d.(\partial W/\partial x - \partial W/\partial y))$ |
| harmonique q(6): | $\exp(-i.d.(\partial W/\partial x - \partial W/\partial y))$ |

**Annexe Formules** (2)

(VII)

$$- k. \; \partial I/\partial z = \nabla I \; . \; \nabla W + I \; . \; \nabla^2 W$$

(VIII)

$$\Delta I = Ip_L - Ip_0 = -L/k \,.\, (\nabla Ip_0 \,.\, \nabla Wp_0 + Ip_0 \,.\, \nabla^2 Wp_o)$$

$$d = a \,.\, L$$

(IX)

$$\nabla Ip_0 \,.\, \nabla W0 + Ip_0 \,.\, \nabla^2 W0 = 0$$

(X)

$$\Delta I = -L/k \,.\, (\, \nabla Ip_0 \,.\, \Delta W + Ip_0 \,.\, \nabla^2 W)$$

(XI)

$$(-k/L).\Delta I = \exp(-i.a.x) \,.\, (\nabla^2 W - i.a.\partial W/\partial x)$$

$$\exp(+i.a.x) \,.\, (\nabla^2 W + i.a.\partial W/\partial x)$$

$$\exp(-i.a.y) \,.\, (\nabla^2 W - i.a.\partial W/\partial y)$$

$$\exp(+i.a.y) \,.\, (\nabla^2 W + i.a.\partial W/\partial y)$$

$$\exp(-i.a.(x-y)) \,.\, (\nabla^2 W - i.a.(\partial W/\partial x - \partial W/\partial y))$$

$$\exp(+i.a.(x-y)) \,.\, (\nabla^2 W + i.a.(\partial W/\partial x - \partial W/\partial y))$$

$$+ 3. \, \nabla^2 W$$

(XII)

|  | Réel | Imaginaire |
|---|---|---|
| harmonique q(1): | $\nabla^2 W$ | $+a.\partial W/\partial x$ |
| harmonique q(2): | $\nabla^2 W$ | $-a.\partial W/\partial x$ |
| harmonique q(3): | $\nabla^2 W$ | $+a.\partial W/\partial y$ |
| harmonique q(4): | $\nabla^2 W$ | $-a.\partial W/\partial y$ |
| harmonique q(5): | $\nabla^2 W$ | $+a.(\partial W/\partial x - \partial W/\partial y)$ |
| harmonique q(6): | $\nabla^2 W$ | $-a.(\partial W/\partial x - \partial W/\partial y)$ |
| fondamental: | $3.\nabla^2 W$ | 0 |

## Revendications

1. Procédé pour l'analyse des défauts de la surface d'onde d'un faisceau de lumière, survenus lors de sa propagation, comprenant les étapes suivantes :

   a) on applique un faisceau de lumière monochromatique (FI) à un système optique définissant, sur le trajet dudit faisceau, au moins deux zones optiquement conjuguées l'une de l'autre, l'une dite plan d'analyse (PA), et l'autre dite plan de partition (PP),

   b) on prévoit, sensiblement au niveau du plan de partition (PP) ou d'une image de celui-ci (PC,PC'), au moins trois dioptres principaux (M1,M2,M3), au moins partiellement réfléchissants, ces trois dioptres renvoyant, à partir dudit faisceau, trois faisceaux qui interfèrent en une zone dite plan d'observation, et

   c) on observe et on analyse l'image interférométrique, existant dans au moins une zone dite plan d'observation, voisine d'un plan de référence sensiblement confondu avec le plan de partition (PP) ou conjugué de celui-ci (PO),

caractérisé en ce que dans l'étape b) les trois faisceaux sont renvoyés respectivement par trois dioptres principaux selon des axes non colinéaires,
en ce que dans l'étape c) l'image interférométrique, formée au moyen des trois faisceaux décalés transversalement, contient des informations sur les défauts de la surface d'onde du faisceau analysé, selon trois directions, et en ce que son analyse par traitement d'image comprend :

- une transformée de Fourier spatiale sur l'intensité lumineuse mesurée,
- la séparation, le filtrage et le recentrage de certains au moins des harmoniques liés aux interférences entre les trois faisceaux renvoyés, pris deux à deux, et
- l'application d'une transformée de Fourier inverse, séparément à chacun de ces harmoniques, ce qui fournit trois indications de gradient de défauts de phase de la surface d'onde dans trois directions liées à chaque fois à celles du couple de deux faisceaux renvoyés concernés.

2. Procédé selon la revendication 1, caractérisé en ce que l'une au moins des opérations b) et c) s'effectue à l'aide d'au moins un dioptre auxiliaire semi-transparent (SE1; MS).

3. Procédé selon la revendication 2, caractérisé en ce que le dioptre auxiliaire (SE1) est proche du plan de partition, et que l'un au moins (M1) des dioptres principaux est disposé au niveau de l'image (PC') du plan de partition (PC) que donne ce dioptre auxiliaire.

4. Procédé selon l'une des revendications 1 et 2, caractérisé en ce que les trois dioptres principaux (M1,M2,M3) sont disposés dans le plan de partition.

5. Procédé selon l'une des revendications 1 à 4, caractérisé en ce que l'opération c) comprend en outre la comparaison de deux images interférométriques obtenues dans des conditions différentes quant à la distance plan de référence/plan d'observation ou aux perturbations subies par le faisceau à analyser, au niveau du plan d'analyse.

6. Procédé selon l'une des revendications 1 à 5, caractérisé en ce que le faisceau à analyser passe par un emplacement d'échantillon, au niveau duquel est situé le plan d'analyse (PA).

7. Procédé selon la revendication 6, caractérisé en ce que l'échantillon est un miroir (MT), le rayonnement monochromatique se situant dans l'infra-rouge pour un miroir en cours de doucissage, et dans le visible pour son contrôle final.

8. Procédé selon la revendication 7, caractérisé en ce que l'échantillon est un miroir concave de grande ouverture (MT), tel qu'un miroir de télescope, illuminé par une source de rayonnement monochromatique, optiquement conjuguée de son centre de courbure.

9. Dispositif pour l'analyse des défauts de la surface d'onde d'un faisceau de lumière, survenus lors de sa propagation, du type comprenant :

- un système optique propre à recevoir un faisceau de lumière monochromatique (FI), et définissant, sur le trajet dudit faisceau, au moins deux zones optiquement conjuguées l'une de l'autre, l'une dite plan d'analyse (PA), et l'autre dite plan de partition (PP),
- un interféromètre comprenant au moins trois dioptres principaux (M1,M2,M3), au moins partiellement réfléchissants, situés au voisinage du plan de partition, ou d'une image de celui-ci, ces trois dioptres renvoyant trois faisceaux qui interfèrent en une zone dite plan d'observation, et
- des moyens d'observation (PDV) et de traitement de l'image interférométrique, formée dans le plan d'observation,

caractérisé en ce que les trois dioptres principaux sont sensiblement plans et aptes à renvoyer les trois faisceaux selon des axes non colinéaires, en mettant en oeuvre un seul **ou deux** dioptre**(s)** auxiliaire**(s)** semi-transparent **(s)** (SE1; MS; **SE'1, SE'2**),
ce qui permet auxdits moyens de traitement d'obtenir des informations sur les défauts de la surface d'onde du faisceau à analyser.

10. Dispositif selon la revendication 9, caractérisé en ce que, ledit **chaque** dioptre auxiliaire (SE1; **SE'1, SE'2**) définissant une image du plan de partition, l'un au moins des trois dioptres principaux est placé au niveau de cette image.

11. Dispositif selon l'une des revendications 9 et 10, caractérisé en ce que l'interféromètre comprend:

   - un cube séparateur (CS) en matériau transparent, muni d'un plan diagonal semi-transparent (PD1), avec une première face formant face d'entrée (FE), une seconde face (FL1), non perpendiculaire au plan diagonal, et située du même côté de ce plan diagonal que la face d'entrée, cette seconde face étant inclinée par rapport à la forme cubique pure, une troisième face (FL2), éventuellement inclinée elle aussi, opposée à la face d'entrée, les seconde et troisième faces définissant deux des dioptres principaux, et

   - le troisième dioptre principal (M3) étant placé à l'extérieur du cube au voisinage de l'un des deux premiers, et incliné par rapport à celui-ci.

12. Dispositif selon la revendication 11, caractérisé en ce que le troisième dioptre principal (M3) est défini par la face avant d'une lame (LL3) dont la face arrière forme anti-retour lumineux.

13. Dispositif selon la revendication 9, caractérisé en ce que l'interféromètre comprend trois membranes réfléchissantes (M1,M2,M3) diversement inclinées sur l'axe du faisceau, au voisinage du plan de partition.

14. Dispositif selon l'une des revendications 9 à 13, caractérisé en ce que les moyens d'observation comprennent des moyens de prise de vues (PDV), et des moyens (UT) propres à effectuer un traitement d'image comprenant:

   - une transformée de Fourier spatiale sur l'intensité lumineuse mesurée,
   - la séparation, le filtrage et le recentrage de certains au moins des harmoniques liés aux interférences entre les trois faisceaux renvoyés, deux à deux, et
   - l'application d'une transformée de Fourier inverse, séparément à chacun de ces harmoniques, ce qui fournit trois indications de gradient de défauts de phase de la surface d'onde dans trois directions liées à chaque fois à celles du couple de deux faisceaux renvoyés concernés.

15. Dispositif selon la revendication 14, caractérisé en ce que, les moyens de traitement (UT) comprennent une mémoire d'image (MI), et sont propres à effectuer ledit traitement d'image sur la différence entre les intensités lumineuses mesurées en deux images interférométriques obtenues dans des conditions différentes.

16. Dispositif selon la revendication 15, caractérisé en ce que, les deux images interférométriques étant obtenues pour deux positions différentes du plan d'observation, ledit traitement fournit trois indications de gradient de défaut de phase de la surface d'onde dans trois directions liées à chaque fois à celles du couple de deux faisceaux renvoyés concernés, et des indications de la courbure locale du défaut de phase.

17. Dispositif selon l'une des revendications 9 à 16, caractérisé en ce que le faisceau de lumière passe par un emplacement d'échantillon, au niveau duquel est situé le plan d'analyse.

18. Dispositif selon les revendications **15 et 17**, prises en combinaison, caractérisé en ce que les deux images interférométriques étant obtenues respectivement avec et sans échantillon, pour une même position du plan d'observation, ledit traitement fournit trois indications de gradient de défaut de phase du plan d'analyse, dans trois directions liées à chaque fois à celles du couple de deux faisceaux renvoyés concernés.

**Patentansprüche**

1. Verfahren zur Analyse der Fehler der Wellenfront eines Lichtstrahls, die während seiner Ausbreitung auftreten, folgende Schritte umfassend:

   a) ein monochromatischer Lichtstrahl (FI) wird eingespeist in ein optisches System, das auf der Bahn des besagten Strahls wenigstens zwei optisch zueinander konjugierte Zonen definiert, die eine Analysenebene (PA) genannt und die andere Teilungsebene (PP) genannt,

b) man sieht vor, im wesentlichen in Höhe Teilungsebene (PP) oder eines Bilds von dieser (PC,PC'), wenigstens drei Hauptdiopter bzw. -grenzflächen (M1,M2,M3), wenigstens teilweise reflektierend, wobei diese drei Diopter, ausgehend von besagtem Strahl, drei Strahlen zurückwerfen, die in einer Beobachtungsebene genannten Zone interferieren, und

c) man beobachtet und man analysiert das interferometrische Bild, vorhanden in wenigstens einer Beobachtungsebene genannten Zone, angrenzend an eine Bezugsebene, im wesentlichen zusammenfallend mit der Teilungsebene (PP) oder zu dieser konjugiert (PO),

**dadurch gekennzeichnet,** daß in Schritt b) die drei Strahlen jeweils durch drei Hauptdiopter entsprechend nichtkolinearen Achsen zurückgestrahlt werden,
daß in Schritt c) das interferometrische Bild, gebildet durch die drei traversal verschobenen Strahlen, Informationen über die Fehler der analysierten Wellenfront enthält, entsprechend drei Richtungen, und
daß seine Analyse durch Bildverarbeitung umfaßt:

- eine räumliche Fourier-Transformierte bzw. -Transformation an der gemessenen Lichtstärke,
- die Trennung, Filtrierung und Rezentrierung wenigstens gewisser Harmonischer, verbunden mit den Interferenzen zwischen den drei zurückgeworfenen Strahlen, paarweise genommen, und
- Anwendung einer Fourier-Rucktransformierten bzw. inversen Fourier-Transformation, getrennt bzw. einzeln auf jede dieser Harmonischen, was drei Phasenfehlergradientenangaben von der Wellenfront in drei Richtungen liefert, jedesmal verbunden mit denen des Paars aus zwei betroffenen zurückgeworfenen Strahlen.

2. Verfahren nach Anspruch 1, dadurch gekennzeichnet, daß wenigstens eine der Operationen b) und c) mit Hilfe von wenigstens einem halbtransparenten Hilfsdiopter (SE1; MS) ausgeführt wird.

3. Verfahren nach Anspruch 2, dadurch gekennzeichnet, daß der Hilfsdiopter (SE1) sich nahe bei der Teilungsebene befindet und daß wenigstens einer (M1) der Hauptdiopter in Höhe des Bildes (PC') der Teilungsebene (PC) angeordnet ist, das dieser Hilfsdiopter liefert.

4. Verfahren nach einem der Anprüche 1 und 2, dadurch gekennzeichnet, daß die drei Hauptdiopter (M1,M2,M3) in der Teilungsebene angeordnet sind.

5. Verfahren nach einem der Anprüche 1 bis 4, dadurch gekennzeichnet, daß die Operation c) außerdem den Vergleich von zwei interferometrischen Bildern umfaßt, erhalten, bei unterschiedlichen Bedingungen bezüglich des Abstands Bezugsebene/Beobachtungsebene oder der von dem zu analysierenden Strahl erlittenen Störungen, in Höhe der Analysenebene.

6. Verfahren nach einem der Anprüche 1 bis 5, dadurch gekennzeichnet, daß der zu analysierende Strahl eine Abtaststelle durchläuft, in deren Höhe sich die Analysenebene (PA) befindet.

7. Verfahren nach Anspruch 6, dadurch gekennzeichnet, daß das Muster ein Spiegel (MT) ist, wobei die monochromatische Strahlung sich im Laufe des Polierens im infraroten Bereich befindet und für seine Endkontrolle im sichtbaren Bereich.

8. Verfahren nach Anspruch 7, dadurch gekennzeichnet, daß das Muster ein konkaver Spiegel mit großer Öffnung ist (MT), wie z.B. ein Teleskopspiegel, beleuchtet mit einer monochromatischen Strahlungsquelle, die zu seinem Krümmungsmittelpunkt optisch konjugiert ist.

9. Verfahren zur Analyse der Fehler der Wellenfront eines Lichtstrahls, die während seiner Ausbreitung auftreten, umfassend:

- ein optisches System für das Empfangen eines monochromatischen Lichtstrahls (FI), das auf der Bahn des besagten Strahls wenigstens zwei optisch zueinander konjugierte Zonen definiert, die eine Analysenebene (PA) genannt und die andere Teilungsebene (PP) genannt,
- ein Interferometer, umfassend wenigstens drei Hauptdiopter bzw. -grenzflächen (M1,M2,M3), wenigstens teilweise reflektierend, nahe bei der Teilungsebene oder eines Bilds von dieser befindlich, wobei diese drei Diopter drei Strahlen zurückwerfen, die in einer Beobachtungsebene genannten Zone interferieren, und
- Einrichtungen zur Beobachtung (PDV) und Verarbeitung des in der Beobachtungsebene gebildeten interferometrischen Bilds,

dadurch gekennzeichnet, daß die drei Hauptdiopter im wesentlichen plan sind und fähig, drei Strahlen entsprechend nicht-kolinearen Achsen zurückzustrahlen, indem sie einen einzigen oder **zwei** halbtransparente Hilfsdiopter (SE1; MS; **SE'1, SE'2**) benutzen,
was den besagten Verarbeitungseinrichtungen ermöglicht, Informationen über die Fehler der Wellenfronten des zu analysierenden Strahls zu erhalten.

10. Vorrichtung nach Anspruch 9, dadurch gekennzeichnet, daß besagter bzw. **jeder** Hilfsdiopter (SE1; **SE'1; SE'2**) ein Bild der Teilungsebene definiert, wobei wenigstens einer der drei Hauptdiopter in Höhe dieses Bilds angeordnet ist.

11. Vorrichtung nach einem der Ansprüche 9 und 10, dadurch gekennzeichnet, daß das Interferometer umfaßt:

- einen Teilerwürfel (CS) aus transparentem Material, versehen mit einer halbtransparenten diagonalen Ebene (PD1) mit einer ersten Fläche, die Eintrittsfläche (FE) bildend, einer zweiten Fläche (FL1), nicht-senkrecht zur diagonalen Ebene und auf der gleichen Seite dieser diagonalen Ebene befindlich wie die Eintrittsfläche, wobei diese zweite Fläche geneigt bzw. schräg ist in bezug auf die reine Würfelform, eine dritte Fläche (FL2), eventuell auch sie schräg, der Eintrittsfläche gegenüberstehend, wobei die zweite und die dritte Fläche zwei der Hauptdiopter definieren, und
- der dritte Hauptdiopter (M3) innerhalb des Würfels in der Nähe von einem der beiden ersten vorgesehen ist, und schräg ist in bezug auf diesen.

12. Vorrichtung nach Anspruch 11, dadurch gekennzeichnet, daß der dritte Hauptdiopter (M3) definiert wird durch die vordere Fläche eines Plättchens (LL3), dessen hintere Fläche eine Antiretoureinrichtung bzw. -behandlung für Licht umfaßt.

13. Vorrichtung nach Anspruch 9, dadurch gekennzeichnet, daß das Interferometer in der Nähe der Teilungsebene drei unterschiedlich geneigte, reflektierende Membranen (M1,M2,M3) auf der Achse des Strahls umfaßt.

14. Vorrichtung nach einem der Ansprüche 9 bis 13, dadurch gekennzeichnet, daß die Beobachtungseinrichtungen Aufnahme- bzw. Abtasteinrichtungen (PDV) enthalten und Einrichtungen (UT) zur Durchführung einer Bildverarbeitung, umfassend:

- eine räumliche Fourier-Transformierte bzw. -Transformation an der gemessenen Lichtstärke,
- die Trennung, Filtrierung und Rezentrierung wenigstens gewisser Harmonischer, verbunden mit den Interferenzen zwischen den drei zurückgeworfenen Strahlen, paarweise, und
- Anwendung einer inversen Fourier-Transformation, getrennt bzw. einzeln auf jede dieser Harmonischen, was drei Phasenfehlergradientenangaben von der Wellenfront in drei Richtungen liefert, jedesmal verbunden mit denen des Paares aus zwei betroffenen zurückgeworfenen Strahlen.

15. Vorrichtung nach Anspruch 14, dadurch gekennzeichnet, daß die Verarbeitungseinrichtungen (UT) einen Bildspeicher umfassen und fähig sind, besagte Bildverarbeitung durchzuführen auf Grund der Differenz zwischen den Lichtstärken, gemessen in zwei interferometrischen Bildern, erhalten bei unterschiedlichen Bedingungen.

16. Vorrichtung nach Anspruch 15, dadurch gekennzeichnet, daß man die beiden interferometrischen Bilder für zwei unterschiedliche Stellungen der Beobachungsebene erhält, besagte Verarbeitung drei Phasenfehlergradientenangaben der Wellenfront in drei Richtungen liefert, jedesmal verbunden mit denen des Paars aus zwei betroffenen zurückgeworfenen Strahlen, und Angaben der lokalen Krümmung des Phasenfehlers.

17. Vorrichtung nach einem der Ansprüche 9 bis 16, dadurch gekennzeichnet, daß der Lichtstrahl eine Muster-bzw. Abtaststelle durchläuft, in deren Höhe sich die Analysenebene befindet.

18. Vorrichtung nach den Ansprüchen 15 und 17, zusammengefaßt, dadurch gekennzeichnet, daß man die beiden interferometrischen Bilder mit und ohne Muster erhält, für ein und dieselbe Stellung der Beobachtungsebene, wobei besagte Behandlung drei Phasenfehlergradientenangaben der Analysenebene liefert, in drei Richtungen, jedesmal verbunden mit denen des Paars aus zwei betroffenen zurückgeworfenen Strahlen.

## Claims

1. Process for analysing defects in the wavefront of a beam of light, which defects occur during its propagation, comprising the following stages:

   a) a beam of monochromatic light (FI) is applied to an optical system defining, on the path of the beam, at least two regions which are optically conjugated with one another and one of which is referred to as the analysis plane (PA) and the other of which is referred to as the partition plane (PP);

   b) at least three main dioptre lenses (M1, M2, M3) are provided substantially in the region of the partition plane (PP) or of an image of that plane (PC, PC'), which three dioptre lenses are at least partially reflective and reflect, from the beam, three beams which interfere in a region referred to as the observation plane; and

   c) the interferometric image, existing in at least one region which is referred to as the observation plane (PO) and which is adjacent to a reference plane substantially merged with the partition plane (PP) or conjugated therewith, is observed and analysed

   characterised in that, in stage b), the three beams are reflected respectively by three main dioptre lenses along non-colinear axes,
   in that, in stage c), the interferometric image formed by means of the three transversely offset beams contains data on the defects in the wavefront of the analysed beam, in three directions, and
   in that its analysis by image processing comprises:

   - a spatial Fourier transform of the luminous intensity measured;
   - the separation, filtering and realignment of at least some of the harmonics linked with the interferences between the three reflected beams, taken in pairs; and
   - the application of an inverse Fourier transform, separately to each of those harmonics, which provides three indications of the gradient of the phase defects in the wavefront in three directions which are each linked with those of the pair of two reflected beams concerned.

2. Process according to Claim 1, characterised in that at least one of operations b) and c) is carried out using at least one semi-transparent auxiliary dioptre lens (SE1; MS).

3. Process according to Claim 2, characterised in that the auxiliary dioptre lens (SE1) is close to the partition plane, and in that at least one (M1) of the main dioptre lenses is arranged in the region of the image (PC') of the partition plane (PC) which this auxiliary dioptre lens gives.

4. Process according to either Claim 1 or Claim 2, characterised in that the three main dioptre lenses (M1, M2, M3) are arranged in the partition plane.

5. Process according to any one of Claims 1 to 4, characterised in that operation c) also comprises the comparison of two interferometric images obtained under different conditions as regards the reference plane/observation plane distance or as regards the perturbations which the beam to be analysed undergoes, in the region of the analysis plane.

6. Process according to any one of Claims 1 to 5, characterised in that the beam to be analysed passes _via_ a sample site, in the region of which the analysis plane (PA) is located.

7. Process according to Claim 6, characterised in that the sample is a mirror (MT), the monochromatic radiation being located in the infra-red range for a mirror in the course of being ground, and in the visible range for its final control.

8. Process according to Claim 7, characterised in that the sample is a wide-angle concave mirror (MT), such as a telescope mirror, illuminated by a monochromatic radiation source which is optically conjugated with its centre of curvature.

9. Device for analysing defects in the wavefront of a beam of light, which defects occur during its propagation, of the type comprising:

- an optical system capable of receiving a beam of monochromatic light (FI) and defining, on the path of the beam, at least two regions which are optically conjugated with one another and one of which is referred to as the analysis plane (PA) and the other of which is referred to as the partition plane (PP);
- an interferometer comprising at least three main dioptre lenses (M1, M2, M3) which are at least partially reflective and are arranged in the vicinity of the partition plane or in the vicinity of an image of that plane, these three dioptre lenses reflecting three beams which interfere in a region referred to as the observation plane; and
- means for observing (PDV) and processing the interferometric image formed in the observation plane,

characterised in that the three main dioptre lenses are substantially flat and are capable of reflecting the three beams along non-colinear axes, using a single **or two** semi-transparent auxiliary dioptre lens**(es)** (SE1; MS; **SE'1, SE'2**),
which enables the processing means to obtain data on the defects in the wavefront of the beam that is to be analysed.

10. Device according to Claim 9, characterised in that, since the said **each** auxiliary dioptre lens (SET; **SE'1, SE'2**) defines an image of the partition plane, at least one of the three main dioptre lenses is placed in the region of that image.

11. Device according to either Claim 9 or Claim 10, characterised in that the interferometer comprises:

- a separator cube (CS) of transparent material having a semi-transparent diagonal plane (PD1), with a first face forming the inlet face (FE), a second face (FL1) which is not perpendicular to the diagonal plane and which is arranged on the same side of that diagonal plane as the inlet face, this second face being tilted relative to the pure cubic form, a third face (FL2) which is likewise optionally tilted and which is arranged opposite the inlet face, the second and third faces defining two of the main dioptre lenses; and

- the third main dioptre lens (M3) being placed outside the cube in the vicinity of one of the first two dioptre lenses and being tilted relative thereto.

12. Device according to Claim 11, characterised in that the third main dioptre lens (M3) is defined by the front face of a plate (LL3) of which the rear face is non-reflective.

13. Device according to Claim 9, characterised in that the interferometer comprises three reflective membranes (M1, M2, M3) which are variously tilted relative to the axis of the beam, in the vicinity of the partition plane.

14. Device according to any one of Claims 9 to 13, characterised in that the observation means comprise image-taking means (PDV) and means (UT) capable of effecting image processing, comprising:

- a spatial Fourier transform of the luminous intensity measured;
- the separation, filtering and realignment of at least some of the harmonics linked with the interferences between the three reflected beams, in pairs; and
- the application of an inverse Fourier transform separately to each of those harmonics, which provides three indications of the gradient of the phase defects in the wavefront in three directions which are each linked with those of the pair of two reflected beams concerned.

15. Device according to Claim 14, characterised in that the processing means (UT) comprise an image memory (MI) and are capable of effecting the said image processing in respect of the difference between the luminous intensities measured in two interferometric images obtained under different conditions.

16. Device according to Claim 15, characterised in that, since the two interferometric images are obtained for two different positions of the observation plane, the said processing provides three indications of the gradient of the phase defects in the wavefront in three directions which are each linked with those of the pair of two reflected beams concerned, and indications of the local curvature of the phase defect.

17. Device according to any one of Claims 9 to 16, characterised in that the light beam passes <u>via</u> a sample site, in the region of which the analysis plane is located.

18. Device according to Claims 15 and 17, taken in combination, characterised in that, since the two interferometric images are obtained respectively with and without a sample, for the same position of the observation plane, the said processing provides three indications of the gradient of the phase defects of the analysis plane, in three directions which are each linked with those of the pair of two reflected beams concerned.

FIG. 1

EP 0 538 126 B1

FIG. 2

FIG. 3

FIG. 4

FIG. 5A

FIG. 5B

$TF\left[e^{i\delta}\dfrac{\partial W}{\partial y}\right]$

$TF\left[e^{i\delta\left(\dfrac{\partial W}{\partial x}-\dfrac{\partial W}{\partial y}\right)}\right]$

q(3)

$\delta(u,v-a)$

$\delta(u-a,v-a)$

q(5)

$TF\left[e^{-i\delta}\dfrac{\partial W}{\partial x}\right]$

q(2)

$TF\left[e^{i\delta}\dfrac{\partial W}{\partial x}\right]$

$\delta(u+a,v)$

S(u,v)

q(1)

$\delta(u-a,v)$

u

$TF\left[e^{-i\delta\left(\dfrac{\partial W}{\partial x}-\dfrac{\partial W}{\partial y}\right)}\right]$

q(4)

$TF\left[e^{-i\delta}\dfrac{\partial W}{\partial y}\right]$

q(6)

$\delta(u+a,v+a)$

$\delta(u,v+a)$

v

# FIG. 6

25

FIG. 6A

FIG. 6B

FIG. 7